# EUROPEAN PATENT APPLICATION

(11) **EP 4 465 264 A1**
(43) Date of publication of application: **20.11.2024**
(21) Application number: 24175174.2
(22) Date of filing: 10.05.2024
(51) Int. Cl.: G07C 5/08

(54) **METHOD AND SYSTEM FOR RECORDING A PERFORMANCE OF A ROAD VEHICLE ON A RACETRACK**

(30) Priority: 18.05.2023 IT 202300010026
(71) Applicant: FERRARI S.p.A., 41100 Modena (IT)
(72) Inventor: TANZI, Alessandro, 41100 MODENA (IT); MASOERO, Erik, 41100 MODENA (IT); VITIELLO, Pasquale, 41100 MODENA (IT)
(74) Representative: Studio Torta S.p.A.

(57) **Abstract**

Method for recording a performance of a road vehicle (2) on a racetrack comprising the steps of: recording, during a racetrack performance and in a synchronous manner, by means of a group of cameras (7) mounted on board the road vehicle (2), a plurality of videos of a surrounding (9) of the road vehicle (2) from a plurality of views (8) at least partially adjacent to one another; wherein adjacent views (8) share an overlap area (10); storing, by means of a control unit (12), in a storage unit (11) mounted on the road vehicle (2), the plurality of videos; wherein the recording step takes place at least at a speed of 30 km/h or more.

## Description

### CROSS-REFERENCE TO RELATED APPLICATIONS

This patent application claims priority from Italian patent application no. 102023000010026 filed on May 18, 2023, the entire disclosure of which is incorporated herein by reference.

### TECHNICAL FIELD

The invention relates to a method and a system for recording a performance of a road vehicle on a racetrack.

In particular, the invention can advantageously, though not exclusively be applied to a high-performance road vehicle during racetrack laps, to which explicit reference will be made in the description below without because of this lacking generality.

### PRIOR ART

For an inexperienced driver, high-performance driving on a track can turn out to be very complicated, since it is completely different from everyday driving on roads open to traffic. In particular, an inexperienced driver can have a very hard time understanding the actual limits of the car and, as a consequence, there is, on the one hand, the chance that the performances of the car are not completely exploited and, on the other hand, there is the risk of going off the road, which is potentially dangerous both for the integrity of the car and for the safety of the driver.

In any case, in order to improve performances, training and analysis hours are usually spent studying the telemetry of the road vehicle during the performance.

Generally speaking, the term "telemetry" indicates the storing and the analysis of data acquired on board the racing vehicle (car, motorcycle, etc.), whose sensors measure parameters and information, such as, for example, number of laps, braking point, speed, accelerations or temperature of the brakes. Then, the measurements are usually sent to a device that stores them in a memory support for a following analysis, during which the profiles of the measured quantities are compared with ideal profiles, explaining to drivers what they can improve in their performance.

However, especially for less experienced drivers, it is very complicated to understand telemetry analyses and to visualize in which point of the track and in which moment they actually have to correct their driving.

Performance-enhancing driver-assistance systems are also known, which, however, often need highly precise data concerning the track on which the vehicle is driving, both to identify the right position of the road vehicle and to provide the driver with suggestions to improve the performances that are sufficiently precise in terms of space and time.

For these and other reasons, the automotive industry needs to process a detecting method and system that are more clear, comprehensible and effective.

### DESCRIPTION OF THE INVENTION

The object of the invention is to provide a method and a system for recording a performance of a road vehicle, which are at least partially free from the drawbacks described above and, at the same time, are simple and economic to be implemented and manufactured.

According to the invention, there are provided a method and a system for recording a performance of a road vehicle according to the appended independent claims and, preferably, according to any one of the claims that directly or indirectly depend on said independent claims.

The appended claims describe preferred embodiments of the invention and form an integral part of the description.

### BRIEF DESCRIPTION OF THE DRAWINGS

The invention will now be described with reference to the accompanying drawings, which show some non-limiting embodiments thereof, wherein:
- figure 1 is a schematic perspective view, with details left out for greater clarity, of an embodiment of a system according to the invention comprising a road vehicle;
- figure 2 is a schematic plan view, with details left out for greater clarity, of the embodiment of figure 1; and
- figure 3 is a schematic view, with details left out for greater clarity, of the plan view of the system of figures 1 and 2 while driving along a track.

### PREFERRED EMBODIMENTS OF THE INVENTION

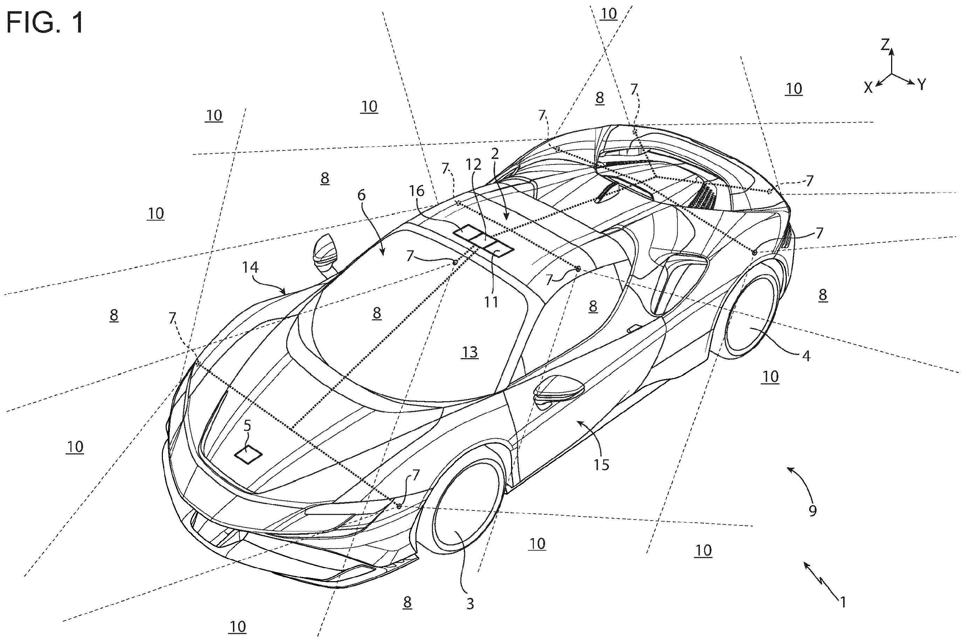

In figure 1, number 1 indicates, as a whole, a system for recording a performance of a road vehicle 2.

The system comprises the road vehicle 2, which is configured to drive, in particular to race, on a track T. In detail, the road vehicle 2 is a high-performance sports cars, namely it is neither a public means of transportation or a means of transportation on rails nor a commercial or industrial vehicle (for example, an agricultural vehicle).

The road vehicle 2 is preferably provided with two front wheels 3 and two rear wheels 4, at least a pair (or all) of them receiving the torque from a powertrain system 5.

The vehicle 1 is provided with a passenger compartment 6, which is designed to accommodate at least one driver and one or more passengers.

In the figures, the same numbers and the same reference letters indicate the same elements or components with the same function.

For the purposes of the invention, the term "second" component does not imply the presence of a "first" component. As a matter of fact, these terms are only used as labels to improve clarity and should not be interpreted in a limiting manner.

The elements and features contained in the different preferred embodiments, drawings included, can be combined with one another or be isolated from one another, without for this reason going beyond the scope of protection of this patent application, as described hereinafter.

In particular, the system 1 comprises a group of cameras 7 for detecting a performance of the road vehicle 2. In detail, the group of cameras 7 is mounted on board the road vehicle 2.

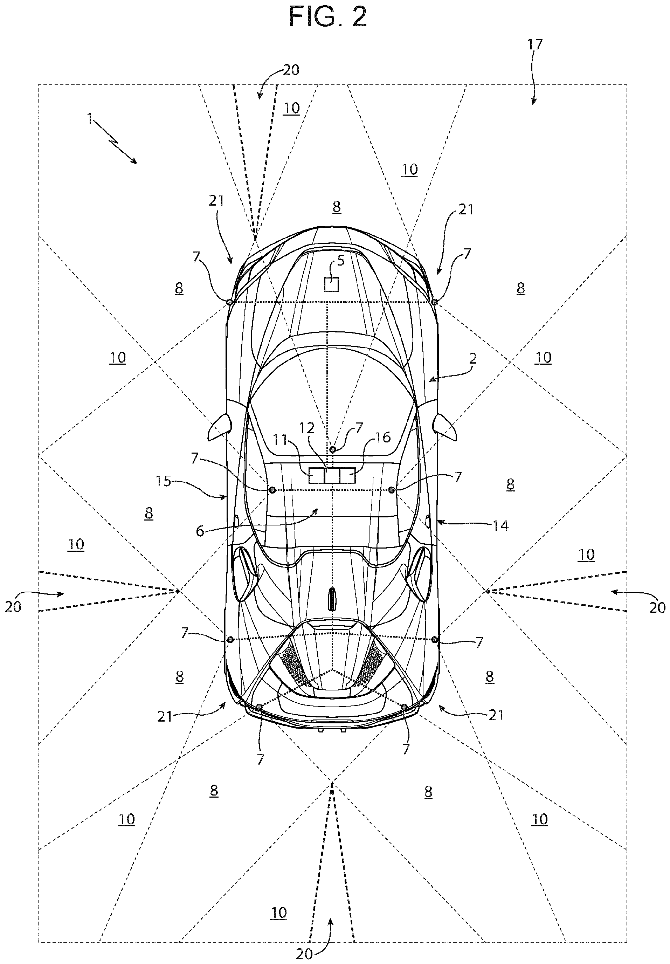

The group of cameras 7 comprises at least four cameras 7, each located along at least one side of the road vehicle 2, in particular at least six cameras 7, more in particular at least eight cameras 7, like the nine cameras shown in the non-limiting embodiment of figures 1 and 2.

For instance, like in the non-limiting embodiment of figure 1 or 2, the system comprises at least eight cameras 7, at least four of them being located at the centre (or equally sharing the views from one of the sides, like for the rear in figures 1 and 2) on each one of the four sides of the road vehicle 2 and other four cameras being located in the area of angular portions 21 of the road vehicle 2.

The cameras 7 are configured to record, during a performance on a racetrack T (namely, on a racing circuit) and in a synchronous manner (namely, with an unequivocal or anyway synchronizable time reference), a plurality of videos from a plurality of at least partially adjacent views 8 of a surrounding 9 (namely, a neighbourhood) of the road vehicle 2. The term video indicates the electronic information representing images that can change over time, hence both the so-called *"fixed image"* and the so-called *"moving image".* During the movement of the road vehicle 2, the information obviously comprises moving images.

The term "surrounding" of the vehicle 2 indicates, in particular, the area of the racetrack T that is visible from the road vehicle 2, namely the area surrounding the vehicle (preferably, at 360°) that is visible from a camera 7.

The term "performance" indicates a performance aimed at minimizing the time needed to cover the racetrack T, namely it indicates the behaviour of the vehicle 1 (and, hence, of the driver) during a part, one or more laps of the racetrack T to compete in a race or minimize the (lap) covering time.

In detail, the views are adjacent to one another in pairs and adjacent views share an overlap area 10, in particular located at the lateral ends of each view 8. In other words, the cameras 7 of adjacent views 6 share at least part of their visual field. Therefore, that part of the visual field is detected by two different cameras 7 at the same time. In detail, as shown in the non-limiting embodiment of figure 2, using the camera 7 located in the area of the windshield 13 of the vehicle 2 as an example, it shares an overlap area 10 with both front angular cameras 7 or it could share an overlap area 10 with the camera 7 on the right side 14 and an overlap area 10 with the camera 7 on the left side 15.

In addition, the system comprises a storage unit 11, in particular mounted on board the road vehicle 2.

The system 1 further comprises a control unit 12, which is also mounted on board the road vehicle 1 and is connected to the group of cameras 7 and to the storage unit 11. In particular, the control unit 12 is configured to store, in the storage unit 11, said plurality of recorded videos.

The control unit 12 is advantageously configured to operate the on-racetrack recording made by the cameras 7 and the relative storing of the videos during the high-performance driving, namely even at speeds of 30 km/h or more, thus excluding parking or box-exiting operations, which usually take place at low speeds (for example, below 20 km/h).

In particular, according to some preferred, though non-limiting embodiments, the control unit 12 is configured to enable the recording made by the cameras 7 and the relative storing exclusively when the vehicle 1 is driving along a racetrack T. In other words, while travelling along roads open to traffic, the control unit 12 is configured to disable the possibility of recording by means of the cameras 7 at speeds of 30 km/h or more.

The system 1 is preferably configured to identify (by means of known methods, for example through a GPS tracking or a recognition of the images detected by the cameras 7) when the vehicle 1 is in the area of a racetrack T (namely, a racing circuit) . Based on the position of the vehicle 1 (if it is in the area of racetrack T or not), the control unit 12 is configured to enable the recording by the cameras 7.

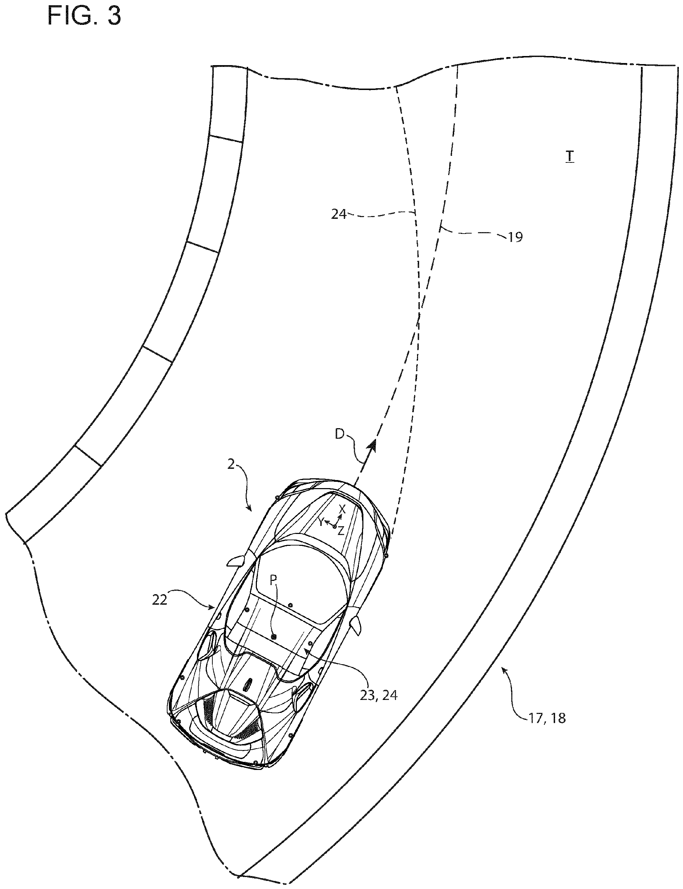

The system 1 preferably also comprises a processing unit 16, which is configured to process said videos, generating a video of an instant-by-instant aerial view 17 (visible, for example, in figure 3) of the surrounding 9 of (namely, of the racetrack around) the vehicle 2 during the performance or generating a three-dimensional mapping 18 of the racetrack T (of which figure 3 can be a plan view, whose point of view is also movable in other orientations).

In some preferred non-limiting cases, like the ones shown in the accompanying figures, the processing unit 16 is mounted on board the road vehicle 2.

In other non-limiting cases which are not shown herein, the processing unit 16 is external to the road vehicle 2 and receives the videos previously recorded in the storage unit 11. For example, the processing unit 16 can be a pc or a server.

Preferably, though not in a limiting manner, as shown in figure 3, the processing unit 16 is further configured to determine, instant by instant, according to the plurality of videos, the position P and the orientation XYZ on the racetrack T of the road vehicle 2 during the performance.

In particular, the processing unit 16 is configured to define, within the video of the aerial view 17 or the three-dimensional mapping 18, the trajectory 19 of the road vehicle 2 on the racetrack T during the performance, combining different instants of said position P and of said orientation XYZ.

Preferably, though not in a limiting manner, the processing unit 16 is configured to define (at least) a joining area 20 between the video images of adjacent views 8. In detail, the joining area 20 is (totally) located within at least part of the overlap area 10 and is obtained by means of known *image stitching* techniques, which are not further described in detail below, thus making the shift from a view 8 to the adjacent one continuous.

The control unit 12 and the processing unit 16 can physically coincide in one single device or can be several devices separated from one another and communicating through, for example, the CAN network of the road vehicle 1 (or, if they are remote, through temporary wiring or internet network).

According to a further aspect of the invention, there is provided a method for recording a performance of a road vehicle 2 on a racetrack T.

The method comprises the step of recording, during a racetrack T performance and in a synchronous manner, by means of the group of cameras 7 mounted on board the road vehicle 2, the plurality of videos from the plurality of views 8 at least partially adjacent to one another of the surrounding 9 of (namely, of the racetrack T around) the road vehicle 2. As mentioned above, adjacent views 8 share an overlap area 10.

The method further comprises the step of storing, by means of the control unit 12 and in the storage unit 11 mounted on board the road vehicle, the plurality of videos recorded by the cameras 7.

The recording step advantageously takes place at least even at a speed of 30 km/h or more. In other words, the recording step takes place during a performance and not during parking operations.

In particular, according to some preferred, though non-limiting embodiments, the control unit 12 enables the recording made by the cameras 7 and the relative storing exclusively when the vehicle 1 is driving along a racetrack T. In other words, while travelling along roads open to traffic, the control unit 12 disables the possibility of recording by means of the cameras 7 at speeds of 30 km/h or more.

The system 1 preferably identifies (by means of known methods, for example through a GPS tracking or a recognition of the images detected by the cameras 7) when the vehicle 1 is in the area of a racetrack T (namely, a racing circuit), in which case the control unit 12 can have the cameras 7 record.

According to some preferred non-limiting embodiments, the set of adjacent views 8 seamlessly covers the view of the surrounding 9 of the road vehicle while driving along the racetrack T. In other words, the cameras 7 are located and shaped so as to create a 360° (annular) video stream. Therefore, each camera 7 determines two overlap areas 10, in which its view 8 overlaps the views of the two cameras 7 adjacent thereto.

As mentioned above, there are at least four, in particular six, more in particular at least eight views 8. In the non-limiting embodiment of figures 1 and 2, there are 9 views 8 (hence, cameras 7), which determine respective overlap areas 10 (each view 8 has two of them, at the right and left end).

According to some non-limiting embodiments, the method further comprises the step of processing, by means of the processing unit 16, the videos recorded by the cameras 7, generating a video (therefore, a sequence of images with a given frequency, resolution and timely correlation) of the instant-by-instant aerial view 17 of the surrounding 9 of (namely, of the racetrack T around) the road vehicle 2 during the performance. The aerial view 17 is also known as *"surround view"* or *"bird's eye view".*

The method preferably comprises the further step of determining, instant by instant, according to the plurality of videos detected by the cameras 7, the position P and the orientation XYZ on the racetrack T of the road vehicle 2 during the performance.

In particular, the method further comprises placing (in detail, digitally superimposing according to known video processing techniques, which are not further described in detail below), consistently with the position P and the orientation WYZ defined above, instant by instant, a plan image 22 of the road vehicle 2 in the video of the aerial view 17. In this way, drivers can re-watch, after a driving session, the aerial view 17 of their performance in order to understand where they were and directly realize, without having to figure it out based on telemetry graphics, what they could have done better and in which point of the racetrack T.

According to other non-limiting embodiments, the method comprises the further step of processing the videos detected by the cameras 7 and stored in the unit 11, by means of the processing unit 16, generating the three-dimensional mapping 18 of the racetrack T (namely, a three-dimensional virtual model with a movable point of view, of which figure 3 could be a top view of a point of the performance).

In these cases, consistently with the embodiment that processes the aerial view 17, the method also comprises the step of determining, instant by instant, according to the plurality of videos, the position P and the orientation XYZ of the road vehicle 2 on the racetrack T during the performance on the racetrack T.

In particular, even in this case, the method entails placing, consistently with the position P and the orientation XYZ defined above, instant by instant (namely, following the time flow of the recorded videos), a three-dimensional model 23 of the road vehicle 2 in the three-dimensional mapping 18 of the racetrack T. In this way, not only can drivers use the aerial view 17 to re-watch their performance, but they can also analyse the performance at an increased level of detail, changing the point of view and assessing, for example, the distances from the curbs, the view that they should have in a given braking point, etcetera.

Advantageously, though not in a limiting manner, the position P and the orientation XYZ are defined by combining, according to visual odometry techniques (which are known and, therefore, are not described in detail), the detected videos with a vehicular odometry detected during the performance. In particular, the visual odometry and the vehicular odometry are overlapped (comparing the dynamics of the images with the dynamics of the vehicle) to define, with a sufficient degree of accuracy, the position of the road vehicle 2 on the racetrack T, in particular on the three-dimensional mapping 18.

In some preferred non-limiting cases, the method comprises, both in the case of the aerial view 17 and in the case of the three-dimensional mapping 18, the further step of defining the trajectory 19 of the road vehicle during the performance, in particular by combining different instants of the position P (if necessary, also considering the orientation XYZ, if one wants to provide the directions that the vehicle could follow).

In order to magnify what could be improved in the performance, the trajectory 19 of the road vehicle 2 during the performance is preferably compared, in the three-dimensional mapping 18 or in the aerial view 17, with an ideal performance 24 (namely, with an ideal trajectory and ideal dynamics, which were previously calculated based on known models).

In particular, the aforesaid method cannot be applied outside of a racetrack T, since a road open to traffic features a plurality of variables (pedestrians, vehicle traffic, traffic lights, irregularities such as holes or bumps, etcetera), which would irreparably affect, due to an excessive confusion in the data of the videos, both the aerial view 17 and a possible three-dimensional mapping 18 (which would make no sense in roads open to traffic).

According to some non-limiting embodiments, each point in the surrounding 9 of the road vehicle 2 is detected by at least two cameras 7. This redundancy helps easily determine the distances and the depth needed to process the three-dimensional mapping.

Alternatively or in addition (in order to improve the processing), the three-dimensional mapping 18 is built by means of known techniques, such as the so-called *"depth map"* or *"inverse perspective mapping"* algorithms, which are based on the knowledge and the parameterization, among other things, of the distortion matrices of each camera 7, thus building the (three-dimensional) voxel starting from the (two-dimensional) pixel.

In other words, by using a more performing control unit 12 it is possible to control several cameras 7 having redundant views 8 to perceive a three-dimensional aspect or it is possible to leave the three-dimensional aspect to the subsequent processing performed by the unit 16, using a smaller number of cameras 7, for example four of them.

According to some non-limiting embodiments, a warm-up lap is is performed (for example, by a gentlemen driver while the driver prepares for the race) at speeds below 100 km/h so as to obtain a reference for the aerial view 17 or for the three-dimensional mapping 18. In this way, the computing burden can be reduced during the performances and tolerances are limited.

In use, the vehicle 2 detects, through the cameras 7, the surrounding 9, namely the racetrack T, and stores said data in the storage unit 11. Following the performance (or partly during it), the processing unit 16 builds the three-dimensional mapping 18 based on the data detected by the cameras 7, using graphic processing and video stitching logics. Within the virtual three-dimensional environment created with the mapping 18, a timely reconstruction of the performance is generated, defining, in it, the position P and the orientation XYZ of the vehicle 2 instant by instant and applying a virtual model consistent with them. In this way, drivers can re-live their driving session and re-watch it from different angles, for example removing themselves from it and watching the position of the virtual model 23 relative to a curb from above.

Even though the invention described above relates to a specific embodiment example, it should not be considered as limited to said embodiment example, for its scope of protection also includes all those variants, changes or simplifications covered by the appended claims, such as, for instance, a different type of sensor, a different location of the joining areas, a different movement of the joining areas, a different type of vehicle (for example, a two-wheel vehicle or a front-drive vehicle), etc..

The invention offers many advantages.

First of all, there is a mitigation of the effects of discontinuity deriving from the presence of obstacles in the joining areas between different views.

Furthermore, the joining areas are moved in real time, thus allowing drivers to constantly be aware of the surroundings.

A further advantage of the invention lies in the possibility of minimizing the risk of deformed obstacles or of obstacles hidden in blind spots of the aerial view.

### LIST OF THE REFERENCE NUMBERS OF THE FIGURES

- 1: system
- 2: vehicle
- 3: wheels
- 4: wheels
- 5: powertrain system
- 6: passenger compartment
- 7: cameras
- 8: views
- 9: surrounding
- 10: overlap area
- 11: storage unit
- 12: control unit
- 13: windshield
- 14: right side
- 15: left side
- 16: processing unit
- 17: aerial view
- 18: three-dimensional mapping
- 19: vehicle trajectory
- 20: joining area
- 21: angular portions
- 22: image
- 23: virtual model
- 24: ideal performance
- D: direction
- P: position
- T: racetrack
- XYZ: orientation

## Claims

1. Method for recording a performance of a road vehicle (2) on a racetrack; the method comprising the steps of:
- recording, during a racetrack performance and in a synchronous manner, by means of a group of cameras (7) mounted on board the road vehicle (2), a plurality of videos of a surrounding (9) of the road vehicle (2) from a plurality of views (8) at least partially adjacent to each other; wherein adjacent views (8) share an area (10) of overlap;
- storing, by means of a control unit (12), on a storage unit (11) mounted on the road vehicle (2), the plurality of videos;
the method being **characterised in that** the recording phase takes place at least at a speed of 30 km/h or more.

2. Method according to claim 1, wherein the set of adjacent views (8) seamlessly covers the view of the surroundings (9) of the road vehicle (2) while driving along the racetrack.

3. Method according to claim 1 or 2, wherein the views (8) are at least four, in particular six, more in particular eight.

4. Method according to any one of claims 1 to 3, and comprising the further step of processing said videos, by means of a processing unit (16), generating an instant-by-instant aerial view (17) video of the surroundings (9) of the road vehicle (2) during the performance.

5. Method according to claim 4 and comprising the further step of determining, instant by instant, according to the plurality of videos, the position and orientation on the racetrack of the road vehicle (2) during the performance and arranging, consistently with said position and said orientation, instant by instant, a plan picture (22) of the road vehicle (2) in the aerial view (17) video.

6. Method according to any one of claims 1 to 3 and comprising the further step of processing said videos, by means of a processing unit (16), generating a three-dimensional mapping (18) of the racetrack.

7. Method according to claim 6 and comprising the further step of determining, instant by instant, according to the plurality of videos, the position and orientation on the racetrack of the road vehicle (2) during the performance.

8. Method according to claim 7 and comprising the step of arranging, consistently with said position and said orientation, instant by instant, a three-dimensional model (23) of the road vehicle (2) in the three-dimensional mapping (18) of the racetrack.

9. Method according to claim 7 or 8, wherein the position and orientation are defined by combining, according to visual odometry techniques, the detected videos to a vehicular odometry detected during the performance.

10. Method according to any one of claims 7 to 9 and comprising the further step of defining, within the three-dimensional mapping (18), the trajectory (19) of the road vehicle (2) during the performance by combining different instants of said position.

11. Method according to claim 10, wherein the trajectory (19) of the road vehicle (2) during the performance is compared, within the three-dimensional mapping (18), to an ideal performance (24).

12. Method according to claim 4 or 5, wherein each point in the surroundings of the road vehicle (2) is detected by at least two cameras (7).

13. System (1) for recording a performance of a road vehicle (2) on a racetrack; the system (1) comprising:
- a road vehicle (2) configured to run on the racetrack;
- a group of cameras (7), mounted on board the road vehicle (2) and configured to record, during an on-racetrack performance and in a synchronous manner, a plurality of videos of a surrounding (9) of the road vehicle (2) from a plurality of views (8) at least partially adjacent to each other; wherein adjacent views (8) share an area (10) of overlap;
- a storage unit (11), mounted on board the road vehicle (2);
- a control unit (12), connected to the group of cameras (7) and the storage unit (11) and configured to store, on the unit (11) of storage, the plurality of videos;
the system (1) being **characterised in that** the control unit (12) is configured to control the recording by the cameras (7) and the storage of the videos even at speeds of 30 km/h or more.

14. System (1) according to claim 13 and comprising at least four cameras (7), in particular six, plus in particular eight.

15. System (1) according to claim 13 or 14 and comprising a processing unit (16), preferably mounted on board the road vehicle (2), which is configured to process said videos by generating an instant-by-instant aerial view (17) video of the surroundings (9) of the road vehicle (2) during the performance or by generating a three-dimensional mapping (18) of the racetrack.

16. System (1) according to claim 13, wherein the processing unit (16) is further configured to determine, instant by instant, according to the plurality of videos, the position and orientation on the racetrack of the road vehicle (2) during the performance; in particular, to define, within the video of the aerial view (17) or the three-dimensional mapping (18), the trajectory (19) of the road vehicle (2) during the performance by combining different instants of said position and said orientation.
